# EUROPEAN PATENT SPECIFICATION

(11) **EP 1 359 520 B1**
(45) Date of publication and mention of the grant of the patent: **13.08.2008**
(21) Application number: 03076257.9
(22) Date of filing: 29.04.2003
(51) Int. Cl.: G06F 17/30

(54) **Computer system for linking a group of searchable websites**
Computersystem zum Verknüpfen einer Gruppe von suchbaren Websites
Système informatique pour relier un groupe de sites Web cherchables

(30) Priority: 29.04.2002 NL 1020500
(43) Date of publication of application: 05.11.2003
(73) Proprietor: Trezorix B.V., 2333 CR Leiden (NL)
(72) Inventor: van der Meulen, Sander Mathijs, 2631 GC Nootdorp (NL); Nederbragt, Johan Alexander, 2333 CR Leiden (NL)
(74) Representative: Prins, Adrianus Willem

(56) References cited:
- EP-A- 1 160 686
- WO-A-01/82129
- WO-A-02/41164
- SELBERG E ET AL: "THE METACRAWLER ARCHITECTURE FOR RESOURCE AGGREGATION ON THE WEB" IEEE EXPERT, IEEE INC. NEW YORK, US, vol. 12, no. 1, 1997, pages 11-14, XP000689719 ISSN: 0885-9000
- DREILINGER D ET AL: "EXPERIENCES WITH SELECTING SEARCH ENGINES USING METASEARCH" ACM TRANSACTIONS ON INFORMATION SYSTEMS, ASSOCIATION FOR COMPUTING MACHINERY, NEW YORK, US, vol. 15, no. 3, 1 July 1997 (1997-07-01), pages 195-222, XP000702156 ISSN: 1046-8188
- ANGELACCIO M ET AL: "Local searching the Internet" IEEE INTERNET COMPUTING, JAN.-FEB. 2002, IEEE, USA, [Online] vol. 6, no. 1, pages 25-33, XP002236619 ISSN: 1089-7801 Retrieved from the Internet: <URL:http://ieeexplore.ieee.org/iel5/4236/ 21094/00978366.pdf?isNumber=21094&prod=IEE E%20JNL&arnumber=978366&arSt=25&ared=33&ar Author=Angelaccio%2C+M.%3B+Buttarazzi%2C+B .%3B> [retrieved on 2003-03-21]
- MANBER U ET AL: "WebGlimpse-combining browsing and searching" PROCEEDINGS OF THE USENIX 1997 ANNUAL TECHNICAL CONFERENCE, PROCEEDINGS OF USENIX 1997 ANNUAL TECHNICAL CONFERENCE, ANAHEIM, CA, USA, 6-10 JAN. 1997, [Online] pages 195-206, XP002236620 1997, Berkeley, CA, USA, USEXIX Assoc, USA ISBN: 1-880446-84-7 Retrieved from the Internet: <URL:http://citeseer.nj.nec.com/manber97we bglimpse.html> [retrieved on 2003-03-21]
- CAMPBELL J K ET AL: "Constructing educational courseware using NCSA Mosaic and the World-Wide Web" COMPUTER NETWORKS AND ISDN SYSTEMS, NORTH HOLLAND PUBLISHING. AMSTERDAM, NL, vol. 27, no. 6, 1 April 1995 (1995-04-01), pages 887-896, XP004013191 ISSN: 0169-7552
- KLEINBERG J M: "Authoritative sources in a hyperlinked environment" JOURNAL OF THE ACM, ASSOCIATION FOR COMPUTING MACHINERY, NEW YORK, US, vol. 46, no. 5, September 1999 (1999-09), pages 604-632, XP002226183 ISSN: 0004-5411

## Description

The invention relates to a computer system for linking a group of searchable websites, each of which, in response to the reception of a first search command, outputs references referring to information files accessible through these references and included in the website, which information files are associated with the search command.

Such a computer system forms a well-known configuration for websites which can be approached via, for instance, the Internet. A search command can then consist of one or more keywords or parts of keywords and/or combinations thereof connected or not connected by means of search operators such as Boolean operators. Usually, the key words are organised in reference data bases such as an index data base and/or a key word list which can be thematically organized. From the reference data base, a key word can be selected, thus forming a reference to an information file generally included in an information data base, which information file is opened by means of the respective key word.

A problem in the management and maintenance of websites is that for a consistent information representation, high demands are imposed on the structure of such a site, which, as a result, has a highly specific structure and cannot be easily integrated with other sites. That is why, in practice, it proves to be particularly awkward to create links between different sites, if one wants to make information available one-sidedly or reciprocally. Often, the only solution is then, with the combined information contents of the different sites, to form a new site, in which the information content is combined into a new, once again specific, structure. Such a solution has organisational disadvantages, because the separate sites often have their own editors, who then have to agree on how the new, combined site is to be arranged. To such a solution, also, technical drawbacks are attached, which may sometimes render it difficult to separately manage and to keep up to date the information originating from the separate sites. Further, such a solution is also highly inflexible, if a link is selected, it is definite, and it is not easy to undo such a connection and/or to enter into further links with third parties.

The document WO 01/82129 by Mondosoft A/S discloses a system that is intended to provide a local search facility via a global search result. It is however merely concerned with providing a more detailed local search, not with cumulating search results of various websites identified as a "subgroup" of the searchable websites.

The object of the invention is to provide a solution to the above-mentioned problems and to provide a system and method, wherein such drawbacks do not occur and links can be made in an easy and flexible manner. To that end, the invention provides a computer system according to the above-mentioned opening paragraph, the system further comprising:
a receiving unit for receiving a first search command and a website to be searched;
a first interface for approaching a link data base, which, in response to the reception of the website to be searched, outputs a subgroup of websites associated with the website;
a second interface, which, in response to the reception of the first search command and the subgroup of websites, originating from the first interface, outputs a second search command to each website of the subgroup of websites; which second interface is arranged for receiving references from each of the websites of the subgroup, in response to the outputted second search command;
a processing unit for controlling first and second interfaces and for combining the references received from the websites into a combined search result list; and
an output unit, for outputting the search result list.

By using such a link data base, which controls the links between the sites, it is possible to make connections with sites and undo them again in an easy manner, while it can be indicated to a highly specific extent, per site, with which of the further sites contacts are maintained. As a consequence, it is possible to have a site function virtually unmodified while, if desired, the site can be expanded with information from other sites.

In a preferred embodiment, the receiving unit is arranged for receiving a reference selected by a user, and the output unit is arranged for outputting an information file associated with the selected reference. The output unit can then output a display command indicating from which of the group of websites a reference and/or information file originates. As a result, the advantage is achieved that a "friendly" site can be opened in a completely integrated manner in the context of a website approached by a user, in that upon reception of references in response to an entered search command in such a site, also references from other sites can be outputted and displayed as if they were referring to information files from the website approached by the user. In a different configuration, an associated site can have a "known" status, wherein the information can indeed be consulted as a result of a search command in the site approached by a user, but wherein the references and files associated therewith are displayed in a separate context, so that it is clear from which website the information originates. If two sites have an "unknown" status in relation to each other, information cannot be exchanged reciprocally.

In a preferred embodiment, the system comprises a number of searchable websites, each comprising a reference data base and an information data base. The reference data base can comprise lists of thematically organised key words, which are coupled to an information file in the information data base such that a key word forms a reference for retrieving an information file from the information data base.

In a further preferred embodiment, the system comprises a link data base for outputting, in response to the reception of a first website to be searched, a subgroup of websites associated with the website. Preferably, the link data base comprises at least one coupling list for outputting, in response to the reception of a first search command for searching the first website, a second search command, associated via the coupling list, for searching a second website, associated with the first website. Due to such a structure of the link data base, it not only becomes possible to approach a set of associated websites on the basis of a search command in or from the context of a website, but it is also possible to modify the search command per website by means of the coupling list. This offers the advantage that from the context of a website, with the aid of a key word list associated with the website, search terms related therewith from other websites are opened.

The invention further relates to a computer, comprising a sending unit for sending a search command and a website to be searched to a receiving unit of a computer system according to at least one of the above-mentioned aspects, which sending unit is further arranged for sending a reference for obtaining an information file associated therewith; a receiving unit for receiving a combination of references and an information file in response to a reference selected by a user; and a display unit for displaying a search result list and a received information file, which display unit is arranged to display, in response to a reception of a display instruction, from which website a reference and/or information file originates. This computer is arranged to seek contact with the computer system according to the above-mentioned aspects, so that via this computer, a user can obtain access to the information which is sent via that system.

The application further relates to a method for searching information items from a group of searchable websites, each of which, in response to the reception of a search command, output references which refer to information files accessible by means of those references and included in the website, which information files are associated with the search command. The method according to the invention is characterized by the following steps: making available commonly available link information, which assigns an individual subgroup of associated websites to each of the group of websites; receiving a search command from a context of a first of the websites, the search command comprising a search command, consulting link information for the first of the websites; searching for references to those of the information items which are associated with the search command in the subgroup of websites which, according to the link information, are associated with the first of the websites; and outputting a combination of references received from each of the websites of the subgroup of websites as a response to the search command of the context mentioned.

The invention will be further elucidated with reference to the description of the drawings. In the drawing:
Fig. 1 shows a preferred embodiment of the computer system of the invention;
Fig. 2 shows a preferred embodiment of a user computer for approaching the computer system of the invention;
Fig. 3 shows a diagram with the steps of the method according to the invention represented therein; and
Fig. 4 shows a schematic representation of a preferred embodiment of a link data base according to the invention.

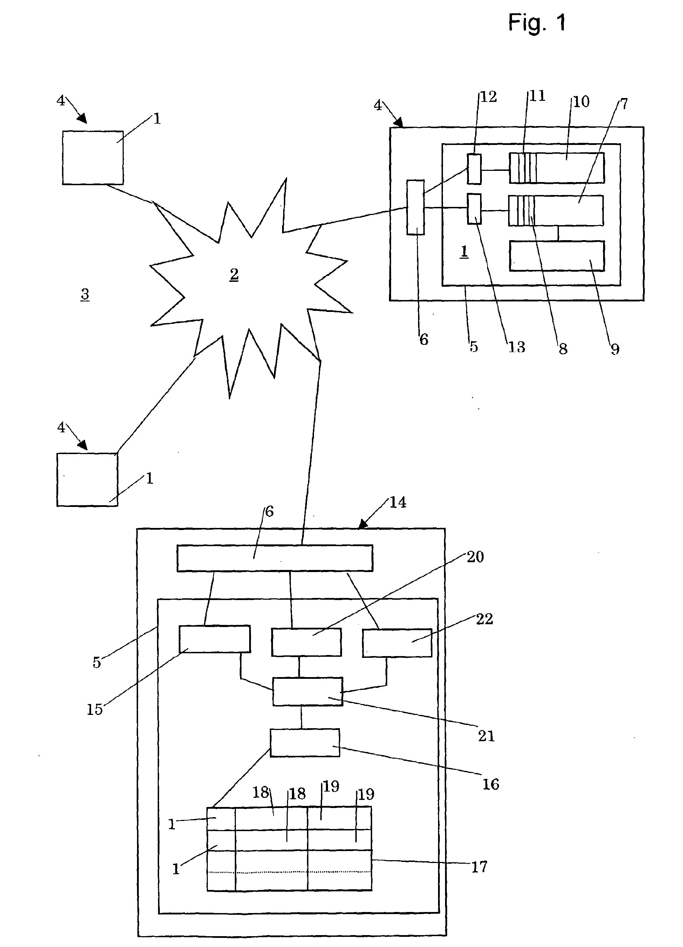

In Fig. 1, schematically, a configuration of websites 1 is represented, which can be approached via the Internet 2. The platform for the websites 1 is formed by a computer system 3 comprising computers 4 connected to each other via the Internet 2. For the sake of convenience, the structure of one of these computers 4 is further represented; other computers have a similar architecture. A computer 4 comprises a data storing medium 5 in which the website 1 is stored and a communication unit 6 with the aid of which the website 1 can be approached via the Internet 2. The website 1 is formed by an information data base 7 for comprising information files 8 which are opened by the website 1; an editing module 9 for approaching and processing the information files 8 in the information data base 7; and a reference data base 10 associated with the information data base 7. The reference data base 10 comprises references 11 for outputting information stored in the information data base 7. The computer further comprises a search interface 12 for approaching the reference data base 10. In response to the reception of a search command, the search interface 12 outputs a selection of references referring to files 8 in the information data base 7, which are associated with the search command. An output unit 13 is present for approaching and outputting files from the information data base 7, which output unit 13, in response to the reception of a reference 11, outputs a file 8 from the information data base 7.

The websites 1 are arranged so as to be highly independent of each other and are each managed by their own editing module 9, so that it is possible to add, to delete and/or to modify information. Although in the example of the drawing it is represented that the editing module 9 directly manages the files of the website 1, also, in a known manner, so-called mirror-sites can be active, which periodically obtain the identical content as a mother-site, which, itself, need not be directly accessible to users. It is also conceivable that the architecture of the computer system is different, i.e. several sites can be hosted on a central computer, instead of, each time, on different computers.

For applying the invention, a central computer 14 is provided which can be approached by a user via a receiving unit 15. The receiving unit 15 is arranged for receiving a search command and a website to be searched. The search command is entered by the user; the website to be searched can be entered but can also be derived from the context in that a user sends the search command from a particular site. The receiving unit 15 is a functional unit of the computer, which cooperates with a modem and/or network card 6. Via the receiving unit 15, the website 1 to be searched is known to a first interface 16. As a first step in the search process, the interface 16 approaches a link data base 17, which, for each website 1, outputs an associated subgroup 18 of the group of websites 1; naturally, a subgroup 18 can also be formed by (only) the website to be searched. The link data base can further comprise from the websites 1 from the subgroup 18 of the group of websites 1 a display instruction 19, indicating from which of the group of websites 1 a reference 11 and/or information file 8 originates. The central computer 14 further comprises a second interface 20, which, in response to the reception of the subgroup 18 of websites 1 coming from the first interface 16, outputs the received search command to each of the search interfaces 12 of the subgroup 18 of websites 1.

The second interface is arranged for receiving references from each of the websites of the subgroup 18, in response to the outputted search command. A central processing unit 21 controls first and second interfaces and combines references received from the websites 1 into a combined search result list of references. The combined search result list is outputted by an output unit 22. In the combined list it can be indicated from which of the group of websites a reference originates. If such a reference is dispensed with, a complete integration of references of "friendly" sites is represented in the search result. In a different configuration, an associated site may have a "known" status, while the references are represented in a separate context, so that it is clear from which website the information originates. If two sites have an "unknown" status in relation to each other, information cannot be exchanged reciprocally.

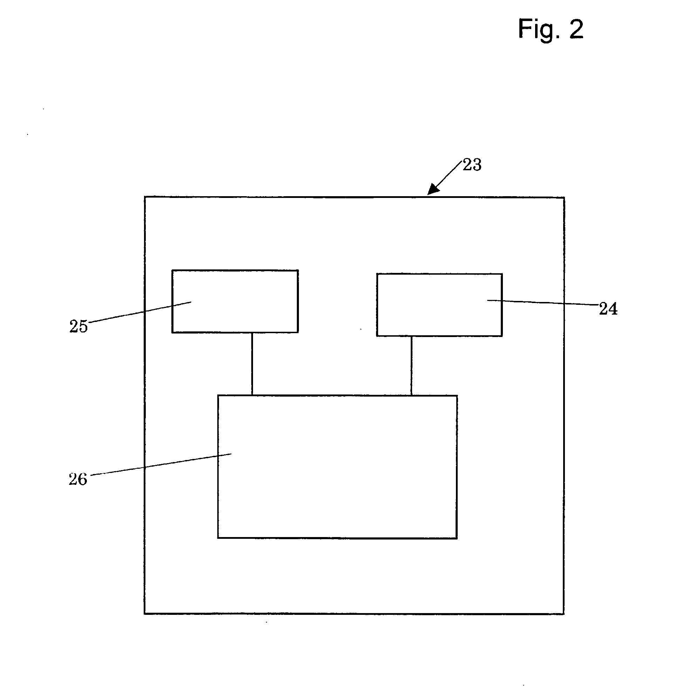

The output unit 22 can be a printer, modem, network card or screen, representing the list on the central computer 14 itself or on a peripheral user computer or terminal 23 described in further detail hereinbelow with reference to Fig. 2.

On the user terminal 23, a search result list is represented and a user can activate a reference 11 from the result list. As a result, the receiving unit 15 receives a reference associated with the reference 11, via the second interface, the file 8 belonging to the reference 11 is retrieved from a respective website and outputted to the terminal 23, in a known manner. The executing unit is arranged for outputting an information file 8 associated with the reference 11. By sending the file via the central computer 14 to the user terminal 23 and not directly from a website 1 to be searched, it is possible to change the context of the file, so that, if desired, it is emphasized or omitted from which of the specific websites of the subgroup 18 of websites the file originates.

With reference to Fig. 2, presently, the arrangement of user terminal 23 will be discussed. In addition to known functional parts (not shown) necessary for the working of a computer, such as a processor, a memory, entering means *et cetera,* this terminal comprises a sending unit 24, a receiving unit 25 and a display unit 26. The sending unit 24 is arranged for sending a search command and a website to be searched entered by a user. In an alternative embodiment, the sending unit 24 can first send the search command to a website from the group of websites (instead of to the central computer 14) which, subsequently, from the context of that website, approaches the central computer 14 for forwarding the search command to the search interfaces 12 of the website 1 from the associated subgroup 18 to a receiving unit 15 of a central computer 14 as discussed with reference to Fig. 1.

The peripheral terminal 23 further comprises a receiving unit 25 for receiving a search result list and/or an information file 8. Through selection of a reference 11 from the search result list, a reference can be sent to the central computer 14 , which, in response to this reference, as discussed hereinabove, sends out an information file 8 with, optionally, a display instruction 19 related thereto. This information file and the search result list can be displayed by display unit 26.

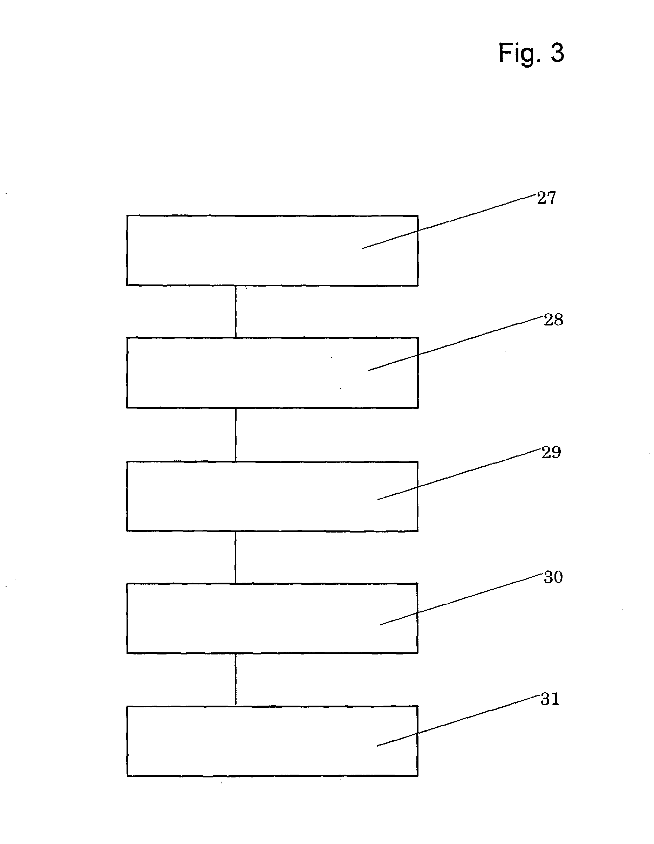

Fig. 3 depicts a schematic representation of the method according to the invention. The method involves searching information items from a group of searchable websites, each of which, in response to the reception of a search command, outputs references which refer to information files accessible by means of those references and included in the website, which information files are associated with the search command.

In a first step 27, commonly available link information is made available, for instance on a central computer or a centrally accessible memory location. The link information assigns an individual subgroup of associated websites to each of the group of websites.

In a second step 28, a search command is received from a context of one of the websites, for instance in that a user makes contact with a central computer and enters a search command as well as a website where the search command is performed, or in that a user enters a search command in a website, which is forwarded from the context of that website to a central computer.

In a third step 29, the link information is consulted for the respective websites, so that a list of websites is available, which, according to the link information, are associated with the one website.

In a fourth step 30, references are searched in the websites associated, according to the link information, with the first of the websites. This search process can be a conventional search process, in which per website, on the basis of a search command, a search result is obtained of references to information items associated with the search command; alternatively, the search process can be carried out by consulting a common search index containing the reference information to information items of all, or a group of websites.

Finally, in a last step 31, a cumulated list of references is outputted which are received from each of the websites of the subgroup of websites, as a response to the search command of the context mentioned.

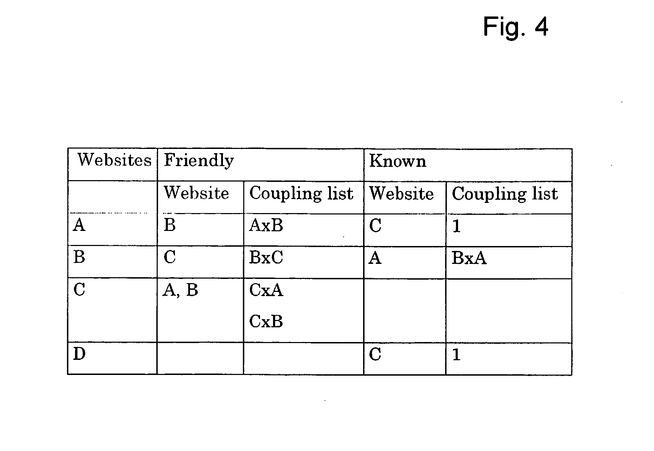

With reference to the table represented in Fig. 4, a preferred embodiment of the link data base will be described. As discussed with reference to Fig. 1, for each website, the link data base contains an associated subgroup of the group of websites. In Fig. 1, this is represented for the websites A, B, C and D: A is associated with a friendly subgroup of websites consisting of website B. A is further associated as known with the subgroup consisting of the website C. For B it holds that C is considered as "friendly" and A as "known". It follows from the example that the relations need not be reciprocal but are defined each time per site. The qualification "friendly" or "known" has already been discussed hereinabove and can imply, for instance, that information originating from a "known" website is represented in a different manner than information originating from a "friendly" site.

Further, in the link data base of the example of Fig. 4, each time, per associated website (i.e. both per "friendly" website and per "known" website) a so-called coupling list is included. Such a coupling list defines the relation between key word lists of different websites. This means that, for website A, a specific key word x can refer to a particular information file X of the site A, while a particular information file X' of website B is opened by means of a different key word x', being, for instance, a synonym or a more specific or more general term for the respective key word. By means of the coupling list, schematically indicated with the term AxB, the relation between x (belonging to A) and x' (belonging to B) is made. As a result, according to the example, by means of one single key word, notably x, the file X from the website A can be opened, and also the file X', which is associated by means of the coupling list with key word x' in website B.

## Claims

1. A computer system for linking a group of searchable websites, each of which, in response to the reception of a first search command, outputs references referring to files accessible by means of those references and included in the website, which files are associated with the search command, comprising:
- a receiving unit for receiving a first search command and a website to be searched; and
- an output unit for outputting a search result list;
**characterized in that** the system comprises
- a first interface for accessing a link data base, which, in response to the reception of the website to be searched, outputs a subgroup of websites associated with the website, which subgroup of websites is a subgroup of said group of searchable websites;
- a second interface which, in response to the reception of the first search command and of the subgroup of websites originating from the first interface, outputs a second search command to each website of the subgroup of websites; which second interface is arranged for receiving references from each of the websites of the subgroup, in response to the second outputted search command; and
- a processing unit, for controlling the first and second interfaces and for combining the references received from the websites in the result list as a cumulated list of search results.

2. A computer system according to claim 1, **characterized in that** the receiving unit is arranged for receiving a reference selected by a user, and **in that** the output unit is arranged for outputting a file associated with the selected reference.

3. A computer system according to claim 1 or 2, **characterized in that** the output unit outputs a display instruction indicating from which of the group of websites a reference and/or file originates.

4. A computer system according to at least one of the preceding claims, **characterized in that** the system comprises a number of searchable websites, each comprising a reference data base and an information data base.

5. A computer system according to claim 4, **characterized in that** the reference data base comprises lists of thematically organised key words, which are coupled to a file in the information data base, such that a key word forms a reference for retrieving a file from the information data base.

6. A computer system according to at least one of the preceding claims, **characterized in that** the system comprises a link data base, for outputting, in response to the reception of a first website to be searched, a subgroup of websites associated with the website.

7. A computer system according to claim 6, **characterized in that** the link data base comprises a coupling list for outputting, in response to the reception of a first search command for searching the first website, a second search command associated via the coupling list for searching a second website associated with the first website.

8. A method for searching information items from a group of searchable websites, each of which, in response to the reception of a search command, outputs references referring to files accessible by means of those references and included in the website, which files are associated with the search command, which method comprises the steps of:
- making available link information, said link information associating a subgroup of the group of searchable websites to each website in the group of searchable websites;
- receiving a search command from a context of a first of the websites;
- consulting said link information for the first of the websites;
- searching references to those of the information items which are associated with the search command in the subgroup of websites which, according to the link information, are associated with the first of the websites; and
- outputting a cumulated list of references, which references are received from each of the websites of the subgroup of websites, as a response to the search command of the said context.

## Patentansprüche

1. Computersystem zum Verknüpfen einer Gruppe durchsuchbarer Webseiten, von denen jede in Reaktion auf den Empfang eines ersten Suchbefehls Referenzen ausgibt, die sich auf Dateien beziehen, auf die mit Hilfe dieser Referenzen zugegriffen werden kann und die in der Webseite enthalten sind, wobei die Dateien mit dem Suchbefehl in Zusammenhang stehen, mit:
- einer Empfangseinheit zum Empfangen eines ersten Suchbefehls und einer zu durchsuchenden Webseite und
- einer Ausgabeeinheit zum Ausgeben einer Suchergebnisliste,
**dadurch gekennzeichnet, dass** das System aufweist:
- eine erste Schnittstelle zum Zugreifen auf eine Verknüpfungsdatenbank, die in Reaktion auf den Empfang der zu durchsuchenden Webseite eine Untergruppe von Webseiten ausgibt, die mit der Webseite in Zusammenhang stehen, wobei die Untergruppe von Webseiten eine Untergruppe der Gruppe durchsuchbarer Webseiten ist,
- eine zweite Schnittstelle, die in Reaktion auf den Empfang des ersten Suchbefehls und der Untergruppe von Webseiten, die von der ersten Schnittstelle stammt, einen zweiten Suchbefehl an jede Webseite der Untergruppe von Webseiten ausgibt, wobei die zweite Schnittstelle angeordnet ist, um in Reaktion auf den zweiten ausgegebenen Suchbefehl Referenzen von jeder der Webseiten der Untergruppe zu empfangen, und
- eine Verarbeitungseinheit zum Steuern der ersten und der zweiten Schnittstelle und zum Kombinieren der von den Webseiten empfangenen Referenzen in der Ergebnisliste als eine kumulierte Liste von Suchergebnissen.

2. Computersystem nach Anspruch 1, **dadurch gekennzeichnet, dass** die Empfangseinheit angeordnet ist, um eine von einem Benutzer gewählte Referenz zu empfangen, und dass die Ausgabeeinheit angeordnet ist, um eine Datei auszugeben, die mit der gewählten Referenz in Zusammenhang steht.

3. Computersystem nach Anspruch 1 oder 2, **dadurch gekennzeichnet, dass** die Ausgabeeinheit eine Anzeigeanweisung ausgibt, die angibt, von welcher der Gruppe von Webseiten eine Referenz und/oder eine Datei stammt.

4. Computersystem nach mindestens einem der vorhergehenden Ansprüche, **dadurch gekennzeichnet, dass** das System eine Anzahl durchsuchbarer Webseiten aufweist, von denen jede eine Referenzdatenbank und eine Informationsdatenbank aufweist.

5. Computersystem nach Anspruch 4, **dadurch gekennzeichnet, dass** die Referenzdatenbank Listen thematisch organisierter Schlüsselwörter aufweist, die mit einer Datei in der Informationsdatenbank gekoppelt sind, so dass ein Schlüsselwort eine Referenz zum Abrufen einer Datei aus der Informationsdatenbank bildet.

6. Computersystem nach mindestens einem der vorhergehenden Ansprüche, **dadurch gekennzeichnet, dass** das System eine Verknüpfungsdatenbank aufweist, um in Reaktion auf den Empfang einer ersten zu durchsuchenden Webseite eine Untergruppe von Webseiten auszugeben, die mit der Webseite in Zusammenhang stehen.

7. Computersystem nach Anspruch 6, **dadurch gekennzeichnet, dass** die Verknüpfungsdatenbank eine Kopplungsliste aufweist, um in Reaktion auf den Empfang eines ersten Suchbefehls zum Durchsuchen der ersten Webseite einen über die Kopplungsliste zugeordneten zweiten Suchbefehl zum Durchsuchen einer zweiten Webseite auszugeben, die mit der ersten Webseite in Zusammenhang steht.

8. Verfahren zum Suchen von Informationselementen aus einer Gruppe durchsuchbarer Webseiten, von denen jede in Reaktion auf den Empfang eines Suchbefehls Referenzen ausgibt, die sich auf Dateien beziehen, auf die mit Hilfe dieser Referenzen zugegriffen werden kann und die in der Webseite enthalten sind, wobei die Dateien mit dem Suchbefehl in Zusammenhang stehen, wobei das Verfahren die Schritte aufweist,
- Verknüpfungsinformation zur Verfügung zu stellen, wobei die Verknüpfungsinformation jeder Webseite in der Gruppe durchsuchbarer Webseiten eine Untergruppe der Gruppe durchsuchbarer Webseiten zuordnet,
- einen Suchbefehl aus einem Kontext einer ersten der Webseiten zu empfangen,
- die Verknüpfungsinformation für die erste der Webseiten zu Rate zu ziehen,
- in der Untergruppe von Webseiten, die gemäß der Verknüpfungsinformation mit der ersten der Webseiten in Zusammenhang stehen, Referenzen auf diejenigen der Informationselemente zu suchen, die mit dem Suchbefehl in Zusammenhang stehen, und
- eine kumulierte Liste von Referenzen auszugeben, wobei die Referenzen als eine Reaktion auf den Suchbefehl des Kontexts von jeder der Webseiten der Untergruppe von Webseiten empfangen wurden.

## Revendications

1. Système informatique pour relier un groupe de sites Web pouvant faire l'objet d'une recherche, dont chacun, en réponse à la réception d'une première commande de recherche, sort des références se référant à des fichiers accessibles au moyen de ces références et inclus dans le site Web, lesquels fichiers sont associés à la commande de recherche, comprenant :
◆ une unité de réception pour recevoir une première commande de recherche et un site Web à rechercher ; et
◆ une unité de sortie pour sortir une liste de résultats de recherche ;
**caractérisé en ce que** le système comprend
◆ une première interface pour accéder à une base de données de liens, qui, en réponse à la réception du site Web à rechercher, sort un sous-groupe de sites Web associés au site Web, lequel sous-groupe de sites Web est un sous-groupe dudit groupe de sites Web pouvant faire l'objet d'une recherche ;
◆ une seconde interface qui, en réponse à la réception de la première commande de recherche et du sous-groupe de sites Web provenant de la première interface, sort une seconde commande de recherche vers chaque site Web du sous-groupe de sites Web ; laquelle seconde interface est agencée pour recevoir des références de chacun des sites Web du sous-groupe, en réponse à la seconde commande de recherche sortie ; et
◆ une unité de traitement, pour contrôler les première et seconde interfaces et pour combiner les références reçues des sites Web dans la liste de résultats comme une liste cumulée de résultats de recherche.

2. Système informatique selon la revendication 1, **caractérisé en ce que** l'unité de réception est agencée pour recevoir une référence sélectionnée par un utilisateur, et **en ce que** l'unité de sortie est agencée pour sortir un fichier associé à la référence sélectionnée.

3. Système informatique selon la revendication 1 ou 2, **caractérisé en ce que** l'unité de sortie sort une instruction d'affichage indiquant duquel du groupe de sites Web une référence et/ou un fichier provient.

4. Système informatique selon au moins une des revendications précédentes, **caractérisé en ce que** le système comprend un nombre de sites Web pouvant faire l'objet d'une recherche, chacun comprenant une base de données de références et une base de données d'informations.

5. Système informatique selon la revendication 4, **caractérisé en ce que** la base de données de références comprend des listes de mots-clés organisés thématiquement, qui sont couplées à un fichier dans la base de données d'informations, de sorte qu'un mot-clé forme une référence pour récupérer un fichier de la base de données d'informations.

6. Système informatique selon au moins une des revendications précédentes, **caractérisé en ce que** le système comprend une base de données de liens, pour sortir, en réponse à la réception d'un premier site Web à rechercher, un sous-groupe de sites Web associés au site Web.

7. Système informatique selon la revendication 6, **caractérisé en ce que** la base de données de liens comprend une liste de couplage pour sortir, en réponse à la réception d'une première commande de recherche pour rechercher le premier site Web, une seconde commande de recherche associée via la liste de couplage pour rechercher un second site Web associé au premier site Web.

8. Procédé pour rechercher des éléments d'information à partir d'un groupe de sites Web pouvant faire l'objet d'une recherche, dont chacun, en réponse à la réception d'une commande de recherche, sort des références se référant à des fichiers accessibles au moyen de ces références et inclus dans le site Web, lesquels fichiers sont associés à la commande de recherche, lequel procédé comprend les étapes consistant à :
◆ rendre disponibles des informations de lien, lesdites informations de lien associant un sous-groupe du groupe de sites Web pouvant faire l'objet d'une recherche à chaque site Web dans le groupe de sites Web pouvant faire l'objet d'une recherche ;
◆ recevoir une commande de recherche d'un contexte d'un premier des sites Web ;
◆ consulter lesdites informations de lien pour le premier des sites Web ;
◆ rechercher des références à ceux des éléments d'information qui sont associés à la commande de recherche dans le sous-groupe de sites Web qui, selon les informations de lien, sont associés au premier des sites Web ; et
◆ sortir une liste cumulée de références, lesquelles références sont reçues de chacun des sites Web du sous-groupe de sites Web, en réponse à la commande de recherche dudit contexte.
